# EUROPÄISCHE PATENTSCHRIFT

(11) **EP 1 072 832 B1**
(45) Veröffentlichungstag und Bekanntmachung des Hinweises auf die Patenterteilung: **22.06.2005**
(21) Anmeldenummer: 00115088.7
(22) Anmeldetag: 27.07.2000
(51) Int. Cl.: F16K 31/06, F16K 13/10

(54) **Ventilanordnung**
Valve arrangement
Arrangement de soupape

(30) Priorität: 29.07.1999 DE 29913326 U
(43) Veröffentlichungstag der Anmeldung: 31.01.2001
(73) Patentinhaber: Bürkert Werke GmbH & Co., D-74653 Ingelfingen (DE)
(72) Erfinder: Costalas, Emmanuel, Dr., 74243 Langenbrettach (DE); Eppler, Gertrud, Dr., 74653 Ingelfingen (DE)
(74) Vertreter: Degwert, Hartmut, Dipl.-Phys.

(56) Entgegenhaltungen:
- GB-A- 940 005
- US-A- 5 353 839
- US-A- 5 509 888
- US-A- 5 693 004

## Beschreibung

Die Erfindung betrifft eine Ventilanordnung mit einem Ventilsitz und einer verformbaren Membran, die in Schließstellung am Ventilsitz anliegt und in Offenstellung von diesem beabstandet ist. Eine derartige Ventilanordnung ist z.B. aus GB-A 940,005 bekannt. Ventilanordnungen können mit einer magnetorheologischen Flüssigkeit versehen sein. Das Prinzip derartiger Ventile beruht darauf, daß die Viskosität einer magnetorheologischen Flüssigkeit durch das magnetische Feld eines Elektro- oder Permanentmagneten beeinflußt wird. Bisher übliche Anwendungen dieser Art benutzen das magnetorheologische Fluid meistens gleichzeitig als Steuerfluid und als Durchflußmedium, so daß spezielle hydraulische Anwendungen möglich sind, wie z.B. Bremsen, Kupplungen oder Stoßdämpfer, die in sich eine abgeschlossene Einheit bilden und bei denen magnetorheologische Ventile z.B. den Zweck erfüllen, daß die Druckdifferenz zwischen zwei nach außen abgeschlossene Kammern verändert wird. Derartige Ventile sind z.B. aus den Patenten US-A 2,661,596, US-A 4,880,216 und aus der DE 19735898 bekannt.

Nachteilig an diesen herkömmlichen Ventilen ist vor allem, daß damit keine gasförmigen, aber auch keine flüssigen Medien, außer magnetorheologischen Flüssigkeiten, geschaltet werden können, d.h. es sind keine Prozeßventile realisierbar, da als Medium in jedem Fall die magnetorheologische Flüssigkeit verwendet werden muß.

Eine zweite Ventilart, die eine magnetorheologische Flüssigkeit benutzt, um den Durchfluß eines anderen, gasförmigen oder flüssigen, nicht magnetorheologischen Medium zu steuern, wird in US 2,670,749 beschrieben.

Nachteilig an dieser Ventilart ist, daß die zu steuernden Medien in direkten Kontakt mit der zur Steuerung verwendeten magnetorheologischen Flüssigkeit kommen, so daß sich die praktische Anwendung dieser Ventilart auf solche flüssige oder gasförmige Medien einschränkt, die in der magnetorheologischen Flüssigkeit unlöslich sind, sonst besteht die Gefahr der Kontamination des zu steuernden Mediums durch die löslichen Anteile der magnetorheologischen Flüssigkeit oder umgekehrt der Degradation der magnetorheologischen Flüssigkeit durch das Medium.

Das erfindungsgemäße Ventil mit den kennzeichnenden Merkmalen von Anspruch 1 hat demgegenüber den Vorteil, daß mit ihm, gesteuert durch ein die magnetische Flüssigkeit beeinflussendes Magnetfeld ein beliebiges flüssiges oder gasförmiges Medium abgesperrt oder durchgelassen werden kann. Hierdurch ist praktisch ein breites Anwendungsspektrum möglich.

Das durch die Erfindung zur Verfügung gestellte Ventil hat darüber hinaus den Vorteil, daß es aus wenigen einfach herzustellenden Teilen sehr kompakt und klein gebaut werden kann. Dadurch ist es für Einsatzgebiete wie die Analysentechnik oder Medizintechnik geeignet. Besonders günstig ist ferner, daß das erfindungsgemäße Ventil keine, bzw. nur wenige bewegliche Teile enthält, so daß keine oder geringe Reibungskräfte auftreten. Durch diese Maßnahmen ergibt sich ein nahezu verschleißfrei arbeitendes Ventil. Darüber hinaus ist aufgrund der geringen Reibungskräfte eine schnelle Reaktionszeit des Ventils sowie ein Schalten des Ventils mit geringer Leistung möglich.

In einer bevorzugten Ausführungsform eines erfindungsgemäßen 2/2-Wegeventils wird die magnetorheologische Flüssigkeit in eine vorzugsweise zylinderförmige Kammer eingeschlossen, die wenigstens auf einer Seite durch eine elastische Membran verschlossen ist. Die zylinderförmige Kammer hat an ihrer Außenseite eine umlaufende Befestigungskontur, mit der sie mit einem topfförmigen Ventilgehäuse verbunden wird. Das topfförmige Ventilgehäuse verfügt über eine Ausgangsöffnung und eine Eingangsöffnung im Zentrum des Topfbodens, zweckmäßigerweise der Membranmitte gegenüberliegend. In diese Eingangsöffnung ist ein Sitzrohr soweit eingedreht, daß der Ventilsitz und die Membran in einem definierbaren Abstand voneinander positioniert sind, wobei das Einschraubgewinde vorteilhafterweise zur Feinjustierung der Durchflußmenge eines Mediums nutzbar ist, das mit einem Druck P am Ventilsitz ansteht. Das Ventilgehäuse wird auf der Seite des Ventilsitzes wenigstens teilweise von einem Elektromagneten umschlossen, der derart dimensioniert ist, daß er mit seinem einen Ende über das mit der Membran verschlossene Ende der zylinderförmige Kammer mit der magnetorheologischen Flüssigkeit ragt.

In der Ausgangslage ist das Magnetfeld entfernt, d.h. der Elektromagnet ist ausgeschaltet. In diesem Fall ist die Viskosität der magnetorheologischen Flüssigkeit gering, so daß sich die Membran 1 unter dem am Sitz anstehenden Druck P ungehindert verformen kann, indem sie sich in Richtung der magnetorheologischen Flüssigkeit wölbt und diese in Richtung auf die dem Sitz abgewandte zweite Seite der Kammer verdrängt. Als besonders günstig hat sich erwiesen, wenn die zweite Seite der Kammer, d.h. die der ersten Membran gegenüberliegende Seite, durch eine elastisch verformbare Membran gebildet wird. Durch diese Maßnahme ist eine ungehinderte Verformung der ersten Membran am leichtesten gewährleistet. Durch die Verformung der Membran ist der Sitz offen, und das Medium fließt vom Eingangskanaldurch das Ventilgehäuse in den Ausgangskanal.

Wird der Elektromagnet mit einer elektrischen Spannung beaufschlagt, wird die magnetorheologische Flüssigkeit durch die Anziehungskraft des Magnetfeldes zur Membran hin beschleunigt. Die Membran preßt sich durch den, mittels beschleunigter magnetorheologischer Flüssigkeit auf sie einwirkenden Druck gegen den Ventilsitz und verschließt diesen. Gleichzeitig ändert sich die Viskosität der magnetorheologischen Flüssigkeit unter Einwirkung des Magnetfeldes derart, daß sie sich verfestigt. Dies hat den Vorteil, daß die Membran in ihrer Schließstellung unterstützt wird.

In einer weiteren Ausführungsform eines 2/2-Wegeventils wird ein Sitzrohr aus weichmagnetischem Material mit einer konzentrisch um das Rohr gewickelten Magnetspule vorgesehen, so daß das Rohr wie ein Stabmagnet mit einem Pol am Sitz wirkt. Ferner schließt ein Joch den magnetischen Kreis mit der magnetorheologischen Flüssigkeit und verstärkt die Wirkung des Magnetfeldes auf die Flüssigkeit. Ist der Elektromagnet eingeschaltet, wird die magnetorheologische Flüssigkeit vom Magnetfeld in Richtung Sitz angezogen, preßt die Membran gegen den Sitz und schließt in dieser Weise das Ventil. Um das Ventil zu öffnen, wird der Elektromagnet abgeschaltet, wodurch die Viskosität der magnetorheologischen Flüssigkeit abnimmt. Die Membran ist daraufhin unter dem am Sitz austehenden Druck P ungehindert verformbar und wölbt sich in die Richtung der magnetorheologischen Flüssigkeit und verdrängt diese in die Richtung der dem Sitz abgewandten zweiten Seite der Kammer.

In einer weiteren Ausführungsform eines 2/2-Wegeventils wird zur Erzeugung des Magnetfeldes ein Permanentmagnet vorgeschlagen, der auf dem zylinderförmigen Gehäuse hin und her bewegt werden kann. Zum Schließen des erfindungsgemäßen Ventils wird der Permanentmagnet z.B. durch Handbetätigung, in den Bereich der Membran verschoben und zum Öffnen des Ventils wieder aus diesem Bereich entfernt.

In Weiterbildung zu den 2/2-Wegeventilen wird ein 3/2-Wegeventil vorgeschlagen, das mit jedem der vorgenannten elektromagnetischen Antriebe ausgestattet sein kann, mit einer Einlaßöffnung, einer Auslaßöffnung und einer weiteren Öffnung, die z.B. zur Entlüftung des Ventils dient. In dieser Ausführungsform wird die magnetorheologische Flüssigkeit in eine zylindrische Kammer eingeschlossen, die auf beiden Seiten durch eine elastische Membran verschlossen ist. Die zylindrische Kammer weist an ihrer Außenseite eine Befestigungskontur auf. An diese Kammer schließen sich auf beiden Seiten topfförmige Ventilgehäuse an, die mit der Befestigungskontur der zylindrischen Kammer derart verbindbar sind, daß Ausnehmungen in der Befestigungskontur eine Verbindung zwischen den Innenräumen der Ventilgehäuseleile herstellen. Die Lage und Kontur des ersten Gehäuseteils und des Sitzrohres entsprechen dem des 2/2-Wegeventils. Das zweite Gehäuseteil kann in einer fertigungstechnisch einfachen Ausführungsform bis auf eine Öffnung mit dem ersten Gehäuseteil identisch sein. Es enthält eine Entlüftungsöffnung im Zentrum des Topfbodens, die zweckmäßigerweise der Mitte der zweiten Membran gegenüber liegt. In diese Öffnung ist ein zweites Sitzrohr soweit eingedreht, daß der Ventilsitz und die zweite Membran in einem definierbaren Abstand voneinander positioniert sind, und zwar derart, daß die Entlüftungsöffnung bei geschlossener Einlaßöffnung mit der Auslaßöffnung kommuniziert und im geöffneten Zustand des Ventils durch die zweite Membran geschlossen ist. Um die Bauteileanzahl bei der Fertigung gering zu halten ist das zweite Sitzrohr sinnvollerweise mit dem ersten Sitzrohr identisch.

Weitere Merkmale und Vorteile der Erfindung ergeben sich aus der Beschreibung der nachfolgenden Zeichnungen, auf die Bezug genommen wird. In den Zeichnungen zeigen:
- Figur 1 eine schematische Darstellung eines erfindungsgemäßen, mit einem Elektromagneten ausgestatteten 2/2-Wege-Ventils mit einer das Gehäuse umschließenden Spule und mit in geöffnetem Zustand gewölbter Membran
- Figur 2 eine schematische Darstellung eines erfindungsgemäßen, mit einem Elektromagneten ausgestatteten 2/2-Wege-Ventils mit einer das Gehäuse umschließenden Spule und mit in geschlossenem Zustand entlasteter Membran
- Figur 3 eine schematische Darstellung eines erfindungsgemäßen, mit einem Elektromagneten ausgestatteten 2/2-Wege-Ventils mit einer das Gehäuse umschließenden Spule und mit in geöffnetem Zustand entlasteter Membran
- Figur 4 eine schematische Darstellung eines erfindungsgemäßen, mit einem Elektromagneten ausgestatteten 2/2-Wege-Ventils mit einer das Gehäuse umschließenden Spule und mit in geschlossenem Zustand gewölbter Membran
- Figur 5 eine schematische Darstellung eines erfindungsgemäßen, mit einem Elektromagneten ausgestatteten 2/2-Wege-Ventils mit einer um das Sitzrohr gewickelten Spule und mit in geöffnetem Zustand gewölbter Membran
- Figur 6 eine schematische Darstellung eines erfindungsgemäßen, mit einem Elektromagneten ausgestatteten 2/2-Wege-Ventils mit einer um das Sitzrohr gewickelten Spule und mit in geschlossenem Zustand entlasteter Membran
- Figur 7 eine schematische Darstellung eines erfindungsgemäßen, mit einem Elektromagneten ausgestatteten 3/2-Wege-Ventils in geöffnetem Zustand
- Figur 8 eine schematische Darstellung eines erfindungsgemäßen, mit einem Elektromagneten ausgestatteten 3/2-Wege-Ventils in geschlossenem Zustand

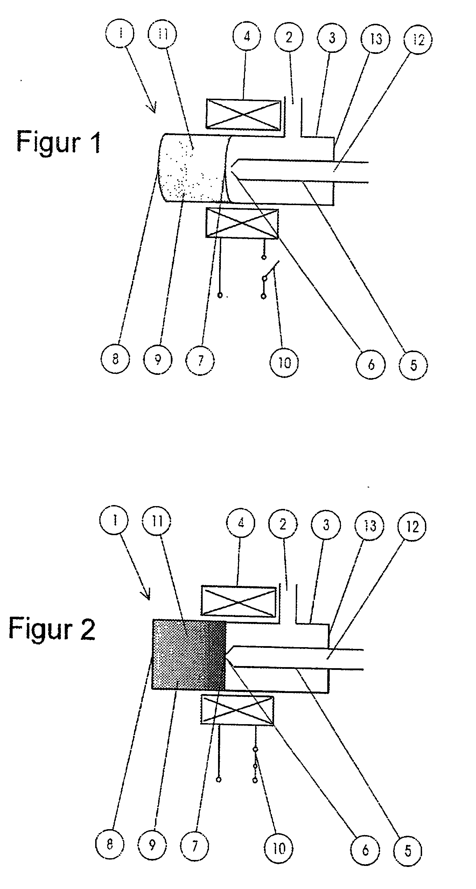

Die Figuren 1 und 2 zeigen schematisch eine Ausführungsform eines 2/2 Wegeventils. Die Ventilanordnung 1 weist ein Gehäuse 3 mit einer Einlaß- 12 und einer Auslaßöffnung 2 auf. Das Gehäuse 3 umfaßt eine zylinderförmige Kammer 11 aus Kunststoff oder Metall, die mit einer magnetorheologischen Flüssigkeit 9 gefüllt ist, wobei die Kammer 11 an den sich gegenüberliegenden offenen Enden durch elastisch verformbare Membranen 7,8 verschlossen ist. In die Einlaßöffnung 12 an der der Membran 7 gegenüberliegenden Seite 13 des Gehäuses 3 ist ein stabförmiges Sitzrohr 5 soweit eingedreht, daß der Ventilsitz 6 im geschlossenen Zustand des Ventils mit der Membran 7 in einer Ebene liegt, wobei die Lage des Ventilsitzes 6 durch Ein- und Ausdrehen des Sitzrohres 5 in der Einlaßöffnung 12 justiert wird. Ein Elektromagnet 4 umschließt das Gehäuse 3 derart, daß nur ein schmaler Bereich der mit magnetorheologischer Flüssigkeit 9 gefüllten Kammer 11 im Bereich der Membran 7 umschlossen ist.

In Figur 1 ist der elektrische Kontakt 10 geöffnet, d.h. der Elektromagnet 4 ist ausgeschaltet. Die Viskosität der magnetorheologischen Flüssigkeit 9 ist so gering daß sich die Membran 7 unter dem am Ventilsitz 6 anstehenden Druck P ungehindert verformen kann, indem sie sich in Richtung der magnetorheologischen Flüssigkeit 9 wölbt und diese in Richtung auf die dem Ventilsitz 6 abgewandten Membran 8 und somit der zweiten Seite der Kammer 11 verdrängt. Durch die Verformung der Membran 7 ist der Ventilsitz 6 offen und das Medium fließt von der Einlaßöffnung 12 durch das Sitzrohr 5 mit dem Ventilsitz 6 und durch das Ventilgehäuse 3 in die Auslaßöffnung 12.

Figur 2 zeigt die Ventilanordnung 1 mit geschlossenem elektrischen Kontakt 10. Die magnetorheologische Flüssigkeit 9 wird durch die Anziehungskraft des Magnetfeldes des eingeschalteten Elektromagneten 4 zur Membran 7 hin beschleunigt. Die Membran 7 preßt sich durch den, mittels beschleunigter magnetorheologischer Flüssigkeit 9 auf sie einwirkenden Druck gegen den Ventilsitz 6 und verschließt diesen. Gleichzeitig ändert sich die Viskosität der magnetorheologischen Flüssigkeit in der Nähe der Membran 7 unter Einwirkung des Magnetfeldes derart, daß sie sich verfestigt und die Membran 7 in ihrer Schließstellung unterstützt.

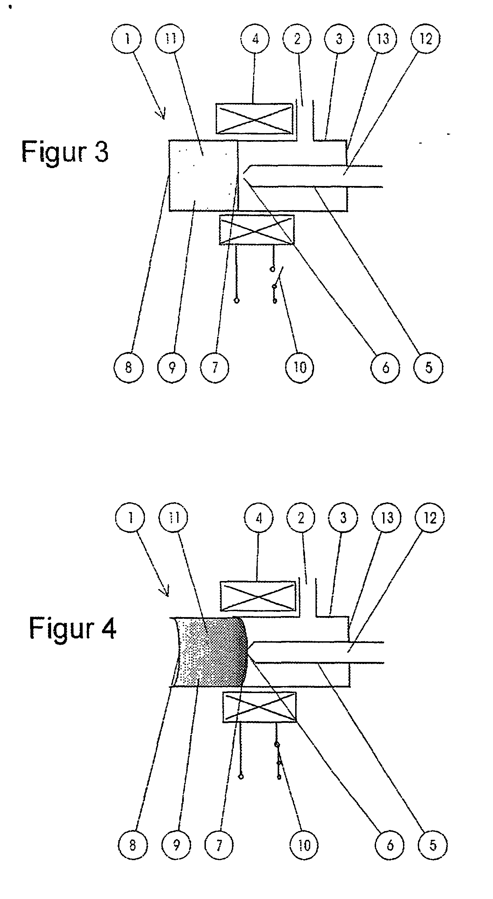

In den Figuren 3 und 4 ist schematisch eine zweite Ausführungsform eines 2/2 Wegeventils gezeigt. Die Ventilnordnung unterscheidet sich von der vorangegangenen Anordnung lediglich dadurch, daß die Membranen 7, 8 im geöffneten Zustand des Ventils entlastet und im geschlossenen Zustand des Ventils gewölbt sind. Das stabförmige Sitzrohr 5 ist in diesem Fall soweit eingedreht, daß zwischen der Membran 7 und dem Ventilsitz 6 ein einstellbarer Spalt bleibt, wobei die Lage des Ventilsitzes 6 durch Ein- und Ausdrehen des Sitzrohres 5 in der Einlaßöffnung 12 justiert wird. Auf diese Weise kann ein Medium mit geringem Druck gesteuert werden.

Figur 3 zeigt die Ventilanordung 1 mit geöffnetem elektrischem Kontakt 10 , d.h. mit ausgeschaltetem Elektromagneten 4. Das Medium kann durch die Bohrung im Sitzrohr 5 über den Ventilsitz 6 und den Spalt 14 ungehindert von der Einlaßöffnung 12 durch das Ventilgehäuse 3 durch die Auslaßöffnung strömen.

Figur 4 zeigt die Ventilanordnung 1 mit geschlossenem elektrischem Kontakt 10. Die magnetorheologische Flüssigkeit wird durch die Anziehungskraft des Magnetfeldes des eingeschalteten Elektromagneten 4 zur Membran 7 hin beschleunigt. Die Membranen 7, 8 wölben sich in Richtung auf den Ventilsitz 6 und die Membran 7 preßt sich durch den mittels beschleunigter magnetorheologischer Flüssigkeit 9 auf sie einwirkenden Druck gegen den Ventilsitz 6 und verschließt diesen. Gleichzeitig ändert sich die Viskosität der magnetorheologischen Flüssigkeit in der Nähe der Membran 7 unter Einwirkung des Magnetfeldes derart, daß sie sich verfestigt und die Membran 7 in ihrer Schließstellung unterstützt.

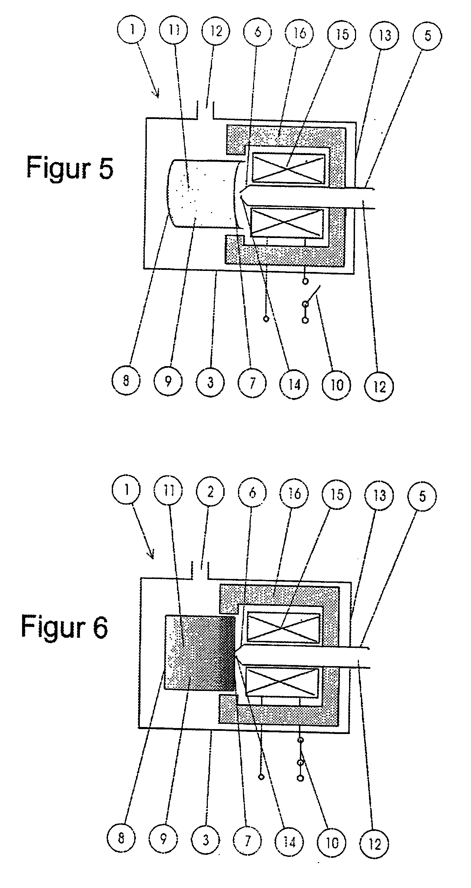

Die Figuren 5 und 6 zeigen schematisch eine weitere Ausführungsform eines 2/2 Wegeventils. Das Ventil weist ein Gehäuse 3 mit einer Einlaß- 12 und einer Auslaßöffnung 2 auf. In dem Gehäuse 3 befindet sich eine zylinderförmige Kammer 11 aus Kunststoff oder Metall, die mit einer magnetorheologischen Flüssigkeit 9 gefüllt ist, wobei die zylinderformige Kammer 11 an den sich gegenüberliegenden offenen Enden durch elastisch verformbare Membranen 7, 8 verschlossen ist. In die Einlaßöffnung 12 an der, einer Membran 7 gegenüberliegenden Seite 13 des Gehäuses 3 ist ein stabförmiges Sitzrohr 5 aus weichmagnetischem Material soweit eingedreht, daß der Ventilsitz 6 im geschlossenen Zustand des Ventils mit der Membran 7 in einer Ebene liegen, wobei die Lage des Ventilsitzes 6 durch Ein- und Ausdrehen des Sitzrohres 5 in der Einlaßöffnung 12 justiert wird. Das Sitzrohr 5 ist konzentrisch von einer Elektromagnetspule 15 umgeben, so daß das Sitzrohr 5 wie ein Stabmagnet mit einem Pol am Ventilsitz 6 wirkt. Ein Joch 16 aus weichmagnetischem Material bildet im eingeschalteten Zustand der Spule 15 mit dem Sitzrohr 5 und der magnetorheologischen Flüssigkeit in der Umgebung der Membran 7 einen magnetischen Kreis, der die Wirkung des Magnetfeldes auf die magnetorheologische Flüssigkeit an der Membran 7 unterstützt.

In Figur 5 ist der elektrische Kontakt 10 geöffnet, d.h. der Elektromagnet 4 ist ausgeschaltet. Die Viskosität der magnetorheologischen Flüssigkeit 9 ist so gering, daß sich die Membran 7 unter dem am Ventilsitz 6 anstehenden Druck P ungehindert verformen kann, indem sie sich in Richtung der magnetorheologischen Flüssigkeit 9 wölbt und diese in Richtung auf die dem Ventilsitz 6 abgewandten Membran 8 und somit der zweiten Seite der Kammer 11 verdrängt. Durch die Verformung der Membranen 7, 8 ist der Ventilsitz 6 offen, und das Medium fließt von der Einlaßöffnung 12 durch das Sitzrohr 5 mit dem Ventilsitz 6 und durch das Ventilgehäuse 3 in die Auslaßöffnung 2.

Figur 6 zeigt die Ventilanordnung mit geschlossenem elektrischen Kontakt 10. Die magnetorheologische Flüssigkeit 9 wir durch die Anziehungskraft des Magnetfeldes des eingeschalteten Elektromagneten 4 zur Membran 7 hin beschleunigt. Die Membran 7 preßt sich durch den, mittels beschleunigter magnetorheologischer Flüssigkeit 9 auf sie einwirkenden Druck gegen den Ventilsitz 6 und verschließt diesen. Gleichzeitig ändert sich die Viskosität der magnetorheologischen Flüssigkeit in der Nähe der Membran 7 unter Einwirkung des Magnetfeldes derart, daß sie sich verfestigt und die Membran 7 in ihrer Schließstellung unterstützt.

Die in den Figuren 5 und 6 gezeigte Ventilanordnung kann auch mit der in Figur 3 und 4 gezeigten Lösung für Niederdrucksysteme kombiniert werden.

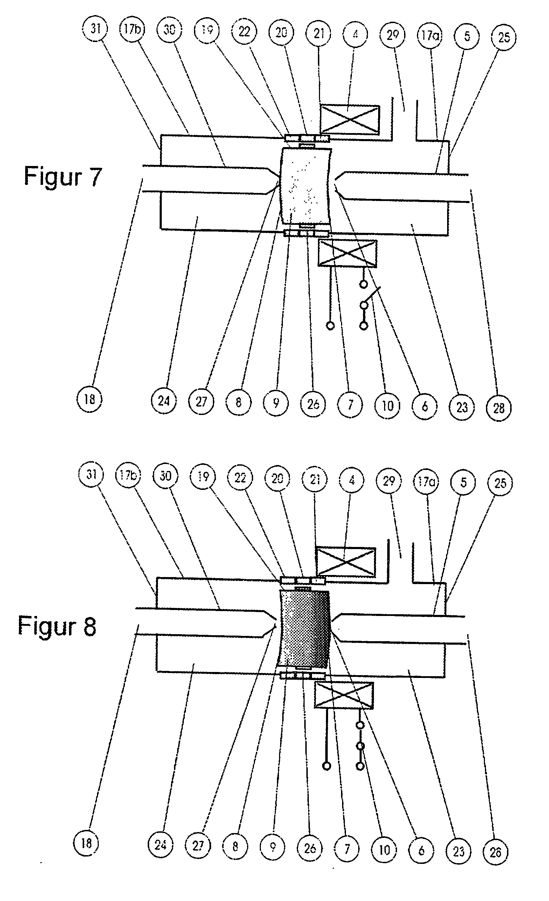

In den Figuren 7 und 8 wird schematisch die Lösung eines 3/2-Wegeventils auf der Basis magnetorheologischer Flüssigkeiten gezeigt. Das Ventil weist ein Gehäuse 17 mit einer Einlaß- 28 und einer Auslaßöffnung 29 sowie einer weiteren Öffnung 18 zur Entlüftung des Ventils auf. Das Gehäuse 17 besteht aus zwei bis auf die Öffnung 18 identischen Gehäuseteilen 17a, 17b. Die magnetorheologische Flüssigkeit 9 ist in einer zylinderförmigen Kammer 19 eingeschlossen, wobei die zylinderförmige Kammer 19 eine Befestigungskontur 20 aufweist, die an Befestigungskonturen 21, 22 der beiden Gehäuseteile 17a, 17b z.B. durch Verschrauben befestigt ist. Der Innenraum 23 des Gehäuseteils 17a und der Innenraum 24 des Gehäuseteils 17b kommunizieren über Ausnehmungen 26 in der Befestigungskontur 20 der zylindrischen Kammer 19. Die zylindrische Kammer ist an den sich gegenüber liegenden offenen Enden durch elastisch verformbare Membranen 7, 8 verschlossen. In die Einlaßöffnung 28 an der, der Membran 7 gegenüber liegenden Seite 25 des Gehäuseteils 17a ist ein stabförmiges Sitzrohr 5 mit einem Ventilsitz 6 soweit eingedreht, daß im geschlossenen Zustand des Ventils der Ventilsitz 6 und die Membran 7 in einer Ebene liegen, wobei die Lage des Ventilsitzes 6 durch Ein- und Ausschrauben des Sitzrohrs 5 in der Einlaßöffnung 28 justierbar ist. Ein Elektromagnet 4 umgibt das Gehäuseteil 17a derart, daß ein schmaler Bereich der mit magnetorheologischer Flüssigkeit 9 gefüllten Kammer 19 an der Membran 7 umschlossen ist. Im Innenraum 25 des zweiten Gehäuseteils 17b ist ein stabförmiges Sitzrohr 30, das mit dem ersten Sitzrohr 5 identisch sein kann, in die Öffnung 18 derart eingedreht, daß im geöffneten Zustand des Ventils der zweite Sitz 27 auf die zweite Membran 8 gepreßt wird. Die Lage des Ventilsitzes 27 wird durch Ein- und Ausdrehen des Sitzrohres 30 in der Entlüftungsöffnung 18 justiert.

In Figur 7 ist der elektrische Kontakt 10 geöffnet, d.h. der Elektromagnet 4 ist ausgeschaltet. Die Viskosität der magnetorheologischen Flüssigkeit 9 ist so gering daß sich die Membran 7 unter dem am Ventilsitz 6 anstehenden Druck P ungehindert verformen kann, indem sie sich in Richtung der magnetorheologischen Flüssigkeit 9 wölbt und diese in Richtung auf die dem Ventilsitz 6 abgewandten Membran 8 und somit der zweiten Seite der Kammer 11 verdrängt. Durch die Verformung der Membran 7 ist der Ventilsitz 6 offen und der zweite Ventilsitz 30 durch die zweite Membran 8 verschlossen. Das Medium kann von der Einlaßöffnung 28 durch das Sitzrohr 5 mit dem Ventilsitz 6 und durch das Ventilgehäuse 17 in die Auslaßöffnung 29 strömen.

Figur 8 zeigt die Ventilanordnung mit geschlossenem elektrischen Kontakt 10. Die magnetorheologische Flüssigkeit 9 wir durch die Anziehungskraft des Magnetfeldes des eingeschalteten Elektromagneten 1 zur Membran 7 hin beschleunigt. Die Membran 7 preßt sich durch den, mittels beschleunigter magnetorheologischer Flüssigkeit 9 auf sie einwirkenden Druck gegen den Ventilsitz 6 und verschließt diesen. Gleichzeitig ändert sich die Viskosität der magnetorheologischen Flüssigkeit in der Nähe der Membran 7 unter Einwirkung des Magnetfeldes derart, daß sie sich verfestigt und die Membran 7 in ihrer Schließstellung unterstützt. Die zweite Membran 8 wölbt sich wie die erste Membran 7 in Richtung auf den ersten Ventilsitz 6 und gibt den zweiten Ventilsitz 27 frei. Das Medium kann von der Auslaßöffnung 29 durch das zweite Ventilsitzrohr 30 zur Entlüftungsöffnung 18 abströmen.

Bei einer Abwandlung der in den Figuren 7 und 8 gezeigten Ausführungsform ist ein zweiter Elektromagnet 4a vorgesehen, der das der Membran 8 benachbarte Ende der Kammer 19 umschließt und alternativ mit dem Elektromagnet 4 ein- bzw. ausgeschaltet wird.

## Patentansprüche

1. Ventilanordnung mit einem Ventilsitz (6) und einer verformbaren Membran (7), die in Schließstellung am Ventilsitz (6) anliegt und in Offenstellung von diesem beabstandet ist, **dadurch gekennzeichnet, daß** die Membran (7) auf ihrer von dem Ventilsitz (6) abgewandten Seite ein mit magnetorheologischer Flüssigkeit (9) gefülltes Volumen abschließt und durch selektive Einwirkung eines Magnetfeldes auf die magnetorheologische Flüssigkeit (9) auslenkbar ist.

2. Ventilanordnung nach Anspruch 1, **dadurch gekennzeichnet, daß** die magnetorheologische Flüssigkeit (9) in einer dicht verschlossenen Kammer (11, 19) eingeschlossen ist und daß sich die verformbare Membran (7) auf der dem Medium zugewandten Seite befindet, die eine unpermeable Trennung zwischen Medium und magnetorheologischer Flüssigkeit (9) darstellt.

3. Ventilanordnung nach Anspruch 1 oder 2, **dadurch gekennzeichnet, daß** die Kammer (11) bzw. das Volumen auf zwei sich gegenüberliegenden Seiten durch jeweils eine verformbare Membran (7 und 8) verschlossen ist.

4. Ventilanordnung nach einem der Ansprüche 1 bis 3, **dadurch gekennzeichnet, daß** die Ventilanordnung ein Gehäuse (3) und die der Membran (7) gegenüberliegende Gehäusewand (13) eine Einlaßöffnung (12) aufweist, in der mit einem Ende ein Sitzrohr (5) angebracht ist, das an seinem anderen Ende einen Ventilsitz (6) aufweist, wobei der Ventilsitz (6) der Membran (7) gegenüber liegt.

5. Ventilanordnung nach einem der Ansprüche 1 bis 4, **dadurch gekennzeichnet, daß** ein Elektromagnet (4) ein Gehäuse (3) derart umschließt, daß sein Magnetfeld nach Anlegen einer elektrischen Spannung auf die magnetorheologischen Flüssigkeit (9) derart einwirkt, daß diese zur Membran (7) hin beschleunigt wird und an der Membran (7) in den festen Zustand übergeht.

6. Ventilanordnung nach Anspruch 5, **dadurch gekennzeichnet, daß** ein Permanentmagnet das Gehäuse (3) des Ventils derart umschließt, daß er auf dem Gehäuse verschiebbar ist und im geschlossenen Zustand des Ventils auf die magnetorheologischen Flüssigkeit (9) derart einwirkt, daß diese zur Membran (7) hin beschleunigt wird und an der Membran (7) in den festen Zustand übergeht.

7. Ventilanordnung nach einem der Ansprüche 4 bis 6, **dadurch gekennzeichnet, daß** das Sitzrohr (5) so weit in das Gehäuse (3) hineinragt, daß bei geöffnetem elektrischem Kontakt (10), d. h. bei nicht vorhandenem Magnetfeld ein mit einem Druck P am Ventilsitz (6) anstehendes Medium die Membran (7) vom Ventilsitz (6) wegdrückt und diesen somit öffnet und daß die Membran (7) durch ein auf die magnetorheologische Flüssigkeit (9) wirkendes Magnetfeld den Ventilsitz (6) verschließt.

8. Ventilanordnung nach Anspruch 7, **dadurch gekennzeichnet, daß** das Sitzrohr (5) so weit in das Gehäuse (3) hineinragt, daß bei geöffnetem elektrischem Kontakt (10), d. h. bei nicht vorhandenem Magnetfeld Medium durch einen Spalt (14) zwischen der Membran (7) und dem Ventilsitz (6) fließt und daß die Membran (7) sich durch ein auf die magnetorheologische Flüssigkeit (9) wirkendes Magnetfeld zum Ventilsitz (6) hin wölbt und diesen verschließt.

9. Ventilanordnung nach einem der Ansprüche 4 bis 8, **dadurch gekennzeichnet, daß** das Sitzrohr (5) aus einem weichmagnetischen Material besteht, um das eine Magnetspule (15) gewickelt ist, daß der Ventilsitz (6) bei eingeschalteter Spule (15) als Pol eines Stabmagneten auf die magnetorheologische Flüssigkeit (9) wirkt und daß ein Joch (16), das einen magnetischen Kreis zwischen der magnetorheologischen Flüssigkeit (9) und dem Sitzrohr (5) schließt, die Wirkung des Stabmagneten verstärkt.

10. Ventilanordnung nach einem der vorangegangenen Ansprüche, **dadurch gekennzeichnet, daß** der Ventilsitz (6) an einem Sitzrohr (5), das durch Ein- und Ausschrauben in einer Einlaßöffnung (12) justierbar ist, angeordnet ist.

11. Ventilanordnung nach einem der Ansprüche 4 bis 10, **dadurch gekennzeichnet, daß** der Ventilsitz (6) an einem Sitzrohr (5), das mit dem Gehäuse (3) fest verbunden ist, gebildet ist.

12. Ventilanordnung nach einem der vorangegangenen Ansprüche, **dadurch gekennzeichnet, daß** sie eine zylindrische oder quaderförmige Kammer (11,19) aufweist.

13. Ventilanordnung nach Anspruch 1 oder 2, mit einem Gehäuse (17), das eine Einlaß- (28) und eine Auslaßöffnung (29) sowie eine weitere Öffnung (18) zur Entlüftung der Ventilanordnung aufweist, **dadurch gekennzeichnet, daß** die Ventilanordnung als 3/2-Wegeventil ausgebildet ist.

14. Ventilanordnung nach Anspruch 13, **dadurch gekennzeichnet, daß** das Gehäuse (17) aus zwei bis auf die Auslaßöffnung (29) identischen Gehäuseteilen (17a, 17b) besteht, daß die magnetorheologische Flüssigkeit (9) in einer zylinderförmigen Kammer (19) eingeschlossen ist, wobei die zylinderförmige Kammer (19) eine Befestigungskontur (20) aufweist, die an Befestigungskonturen (21, 22) der beiden Gehäuseteile (17a, 17b) befestigt ist, daß der Innenraum (23) des Gehäuseteils (17a) und der Innenraum (24) des Gehäuseteils (17b) über Ausnehmungen (26) in der Befestigungskontur (20) der zylindrischen Kammer (19) kommunizieren, daß die zylindrische Kammer (19) an den sich gegenüberliegenden offenen Enden durch elastisch verformbare Membranen (7, 8) verschlossen ist, daß in die Einlaßöffnung (28) an der, der Membran (7) gegenüberliegenden Seite (25) des Gehäuseteils (17a) ein stabförmiges Sitzrohr (5) mit einem Ventilsitz (6) soweit eingedreht ist, daß im geschlossenen Zustand des Ventils der Ventilsitz (6) und die Membran (7) in einer Ebene liegen, daß ein Elektromagnet (4) das Gehäuseteil (17a) derart umgibt, daß ein schmaler Bereich an der Membran (7), der mit magnetorheologischer Flüssigkeit (9) gefüllten Kammer (19) umschlossen ist und daß im Innenraum (25) des zweiten Gehäuseteils (17b) ein stabförmiges Sitzrohr (30), das mit dem ersten Sitzrohr (5) identisch sein kann, in die Öffnung (18) derart eingedreht ist, daß im geöffneten Zustand des Ventils, der zweite Sitz (27) auf die zweite Membran (8) gepreßt wird.

## Claims

1. A valve arrangement comprising a valve seat (6) and a deformable diaphragm (7) which in the closed position rests against the valve seat and in the open position is spaced apart therefrom, **characterized in that** on its side facing away from the valve seat (6), the diaphragm (7) closes off a volume filled with a magnetorheological fluid (9) and is adapted to be deflected by selective action of a magnetic field on the magnetorheological fluid (9).

2. The valve arrangement according to claim 1, **characterized in that** the magnetorheological fluid (9) is enclosed in a tightly sealed chamber (11, 19), and **in that** the deformable diaphragm (7) is located on the side facing the medium, which constitutes an impermeable separation between the medium and the magnetorheological fluid (9).

3. The valve arrangement according to claim 1 or 2, **characterized in that** the chamber (11) or the volume on two opposite sides is closed off by a deformable diaphragm (7 and 8) each.

4. The valve arrangement according to any of claims 1 to 3, **characterized in that** the valve arrangement has a housing (3) and the housing wall (13) opposite the diaphragm (7) includes an inlet opening (12) in which one end of a seat tube (5) is fitted which at its other end has a valve seat (6), the valve seat (6) being located opposite to the diaphragm (7).

5. The valve arrangement according to any of claims 1 to 4, **characterized in that** the housing (3) is surrounded by a solenoid (4) in such a manner that after applying an electric voltage, its magnetic field acts on the magnetorheological fluid (9) such that the latter is accelerated towards the diaphragm (7) and changes into the solid state at the diaphragm (7).

6. The valve arrangement according to claim 5, **characterized in that** the housing (3) of the valve is surrounded by a permanent magnet in such a manner that it can be shifted on the housing and, in the closed condition of the valve, acts on the magnetorheological fluid (9) such that the latter is accelerated towards the diaphragm (7) and changes into the solid state at the diaphragm (7).

7. The valve arrangement according to any of claims 4 to 6, **characterized in that** the seat tube (5) protrudes so far into the housing (3) that, with the electrical contact (10) open, i.e. in the absence of a magnetic field, a medium present at the valve seat (6) at a pressure P forces the diaphragm (7) away from the valve seat (6), thus opening it, and **in that** the diaphragm (7) closes off the valve seat (6) by a magnetic field acting on the magnetorheological fluid (9).

8. The valve arrangement according to claim 7, **characterized in that** the seat tube (5) protrudes so far into the housing (3) that, with the electrical contact (10) open, i.e. in the absence of a magnetic field, a medium flows through a gap (14) between the diaphragm (7) and the valve seat (6), and **in that** the diaphragm (7) bulges towards the valve seat (6) as caused by a magnetic field acting on the magnetorheological fluid (9) and closes off the valve seat.

9. The valve arrangement according to any of claims 4 to 8, **characterized in that** the seat tube (5) consists of a soft magnetic material having a magnet coil (15) coiled around it, that the valve seat (6), with the coil (15) switched on, acts as a pole of a bar magnet on the magnetorheological fluid (9), and **in that** a yoke (16) which closes a magnetic circuit between the magnetorheological fluid (9) and the seat tube (5) intensifies the effect of the bar magnet.

10. The valve arrangement according to any of the preceding claims, **characterized in that** the valve seat (6) is arranged at a seat tube (5) which is adjustable by being screwed into or unscrewed from an inlet opening (12).

11. The valve arrangement according to any of claims 4 to 10, **characterized in that** the valve seat (6) is formed on a seat tube (5) which is firmly connected with the housing (3).

12. The valve arrangement according to any of the preceding claims, **characterized in that** it includes a cylindrical or parallelepipedal chamber (11, 19).

13. The valve arrangement according to claim 1 or 2, comprising a housing (17) having inlet and outlet openings (28, 29) and a further opening (18) for venting the valve arrangement, **characterized in that** the valve arrangement is designed as a 3/2-port directional valve.

14. The valve arrangement according to claim 13, **characterized in that** the housing (17) consists of two housing parts (17a, 17b) which are identical except for the outlet opening (29), **in that** the magnetorheological fluid (9) is enclosed in a cylindrical chamber (19), the cylindrical chamber (19) having an attachment contour (20) which is attached to attachment contours (21, 22) of the two housing parts (17a, 17b), **in that** the interior space (23) of the housing part (17a) and the interior space (24) of the housing part (17b) communicate via recesses (26) in the attachment contour (20) of the cylindrical chamber (19), **in that** the cylindrical chamber (19) is closed off at its opposite open ends by elastically deformable diaphragms (7, 8), **in that** a bar-shaped seat tube (5) having a valve seat (6) is screwed so far into the inlet opening (28) on the side (25) of the housing part (17a) opposite the diaphragm (7) that in the closed condition of the valve the valve seat (6) and the diaphragm (7) lie in one plane, **in that** a solenoid (4) surrounds the housing part (17a) in such a way that a narrow region on the diaphragm (7) of the chamber (19) filled with magnetorheological fluid (9) is enclosed, and **in that** in the interior space (25) of the second housing part (17b) a bar-shaped seat tube (30), which can be identical to the first seat tube (5), is screwed into the opening (18) in such a way that in the open condition of the valve the second seat (27) is pressed onto the second diaphragm (8).

## Revendications

1. Agencement de valve comportant un siège de valve (6) et une membrane (7) déformable qui est en appui sur le siège de valve (6) en position de fermeture et espacée de celui-ci en position d'ouverture, **caractérisé en ce que** sur sa face détournée du siège de valve (6), la membrane (7) ferme un volume rempli d'un liquide magnétorhéologique (9) et peut être déviée par effet sélectif d'un champ magnétique sur le liquide magnétorhéologique (9).

2. Agencement de valve selon la revendication 1, **caractérisé en ce que** le liquide magnétorhéologique (9) est enfermé dans une chambre (11, 19) fermée de manière étanche et **en ce que** la membrane (7) déformable se trouve sur la face tournée vers le fluide, qui constitue une séparation imperméable entre le fluide et le liquide magnétorhéologique (9).

3. Agencement de valve selon la revendication 1 ou 2, **caractérisé en ce que** la chambre (11) et le volume sont fermés sur deux faces opposées par une membrane respective (7 et 8).

4. Agencement de valve selon l'une des revendications 1 à 3, **caractérisé en ce que** l'agencement de valve présente un boîtier (3) et la paroi de boîtier (13) opposée à la membrane (7) présente un orifice d'entrée (12) dans lequel un tube de siège (7) est monté par une extrémité et présente à son autre extrémité un siège de valve (6), le siège de valve (6) étant opposé à la membrane (7).

5. Agencement de valve selon l'une des revendications 1 à 4, **caractérisé en ce qu'**un solénoïde (4) entoure le boîtier (3) de telle sorte qu'après avoir appliqué une tension électrique son champ magnétique agit sur le liquide magnétorhéologique (9) de telle sorte que celui-ci est accéléré vers la membrane (7) et passe à l'état solide au niveau de la membrane (7).

6. Agencement de valve selon la revendication 5, **caractérisé en ce qu'**un aimant permanent entoure le boîtier (3) de la valve de telle sorte qu'il est déplaçable sur le boîtier et qu'à l'état fermé de la valve, il agit sur le liquide magnétorhéologique (9) de telle manière que celui-ci est accéléré vers la membrane (7) et passe à l'état solide au niveau de la membrane (7).

7. Agencement de valve selon l'une des revendications 4 à 6, **caractérisé en ce que** le tube de siège (5) pénètre si loin dans le boîtier (3) que lorsque le contact électrique (10) est ouvert, c'est-à-dire en l'absence de champ magnétique, un fluide se trouvant au niveau du siège de valve (6) avec une pression P pousse la membrane (7) en l'éloignant du siège de valve (6) et ouvre ainsi celui-ci, et **en ce que** la membrane (7) ferme le siège de valve (6) au moyen d'un champ magnétique agissant sur le liquide magnétorhéologique (9).

8. Agencement de valve selon la revendication 7, **caractérisé en ce que** le tube de siège (5) pénètre si loin dans le boîtier (3) que lorsque le contact électrique (10) est ouvert, c'est-à-dire en l'absence de champ magnétique, un fluide s'écoule à travers une fente (14) entre la membrane (7) et le siège de valve (6), et **en ce que** la membrane (7) se bombe vers le siège de valve (6) au moyen d'un champ magnétique agissant sur le liquide magnétorhéologique (9) et ferme le siège de valve (6).

9. Agencement de valve selon l'une des revendications 4 à 8, **caractérisé en ce que** le tube de siège (5) est constitué en un matériau magnétique tendre autour duquel est enroulée une bobine d'électro-aimant (15), **en ce que** lorsque la bobine est excitée, le siège de valve (6) agit en tant que pôle d'un barreau magnétique sur le liquide magnétorhéologique (9) et **en ce qu'**une culasse (16), qui ferme un circuit magnétique entre le liquide magnétorhéologique (9) et le tube de siège (5), renforce l'effet du barreau magnétique.

10. Agencement de valve selon l'une des revendications précédentes, **caractérisé en ce que** le siège de valve (6) est agencé sur un tube de siège (5) qui peut être ajusté par vissage et par dévissage dans un orifice d'admission (12).

11. Agencement de valve selon l'une des revendications 4 à 10, **caractérisé en ce que** le siège de valve (6) est formé sur un tube de siège (5) qui est relié de manière solidaire au boîtier (3).

12. Agencement de valve selon l'une des revendications précédentes, **caractérisé en ce qu'**il présente une chambre (11, 19) cylindrique ou parallélépipédique.

13. Agencement de valve selon la revendication 1 ou 2, comportant un boîtier (17) qui présente un orifice d'admission (28) et un orifice de sortie (29) ainsi qu'un autre orifice (18) pour désaérer l'agencement de valve, **caractérisé en ce que** l'agencement de valve est réalisé sous forme de valve à 3 voies et 2 positions.

14. Agencement de valve selon la revendication 13, **caractérisé en ce que** le boîtier (17) est constitué par deux parties de boîtier (17a, 17b) qui sont identiques à l'exception de l'orifice de sortie (29), **en ce que** le liquide magnétorhéologique (9) est enfermé dans une chambre (19) de forme cylindrique, la chambre (19) de forme cylindrique présentant un contour de fixation (20) qui est fixé aux contours de fixation (21, 22) des deux parties de boîtier (18a, 17b), **en ce que** l'intérieur (23) de la partie de boîtier (17a) et l'intérieur (24) de la partie de boîtier (17b) communiquent via des évidements (26) dans le contour de fixation (20) de la chambre cylindrique (19), **en ce que** la chambre cylindrique (19) est fermée aux extrémités ouvertes opposées l'une à l'autre par des membranes (7, 8) élastiquement déformables, **en ce qu'**un tube de siège (5) en forme de barre est vissé aussi loin dans l'orifice d'admission (28), sur le côté (25) opposé à la membrane (7), de la partie de boîtier (17a), qu'à l'état fermé de la valve, le siège de valve (6) et la membrane (7)se trouvent dans un plan, **en ce qu'**un solénoïde (4) entoure la partie de boîtier (17a) de telle sorte qu'une zone étroite est entourée sur la membrane (7) de la chambre (19) remplie de liquide magnétorhéologique (9), et **en ce que** dans l'intérieur (24) de la deuxième partie de boîtier (17b) est vissé un tube de siège (30) en forme de barre, qui peut être identique au premier tube de siège (5), de telle sorte qu'à l'état ouvert de la valve, le deuxième siège (27) est pressé sur la deuxième membrane (8).
